# FASCICULE DE BREVET EUROPEEN

(11) **EP 3 164 321 B1**
(45) Date de publication et mention de la délivrance du brevet: **15.08.2018**
(21) Numéro de dépôt: 15731029.3
(22) Date de dépôt: 18.06.2015
(51) Int. Cl.: B62D 25/20

(54) **STRUCTURE DE LIAISON ENTRE LA STRUCTURE AVANT DE LA CAISSE D'UN VEHICULE AUTOMOBILE ET LE SOUBASSEMENT DE CE VEHICULE**
VERBINDUNGSSTRUKTUR ZUR VERBINDUNG ZWISCHEN EINER VORDEREN STRUKTUR DER KAROSSERIE EINES KRAFTFAHRZEUGS UND DER UNTERKONSTRUKTION DIESES KRAFTFAHRZEUGS
CONNECTING STRUCTURE PROVIDING THE CONNECTION BETWEEN THE FORWARD STRUCTURE OF THE BODY SHELL OF A MOTOR VEHICLE AND THE UNDERSTRUCTURE OF THIS VEHICLE

(30) Priorité: 01.07.2014 FR 1456291
(43) Date de publication de la demande: 10.05.2017
(73) Titulaire: PSA Automobiles SA, 78300 Poissy (FR); Euramax Industrie S.A., 49260 Montreuil-Bellay (FR)
(72) Inventeur: TUAL, Catherine, F-92190 Meudon (FR); RILAT, Nicolas, F-78150 Le Chesnay (FR); METREAU, Cyril, F-49000 Angers (FR)
(74) Mandataire: Fosse, Danièle
(86) Numéro de dépôt international: PCT/EP2015/063758
(87) Numéro de publication internationale: WO 2016/000976

(56) Documents cités:
- US-A- 5 806 918
- US-A1- 2012 256 446
- US-A1- 2012 256 448

## Description

La présente invention concerne une structure de liaison entre la structure avant de la caisse d'un véhicule automobile et le soubassement de ce véhicule. Le document US 2012/0256446 A1 montre une structure de liaison selon le préambule de la revendication 1. Cette structure de liaison comprend de façon en elle-même connue, un longeron de tunnel s'étendant sous la caisse du véhicule et de part et d'autre de ce longeron, un longeron de soubassement et un longeron de sous caisse s'étendant entre le longeron de tunnel et le longeron de soubassement.

En outre, l'avant du longeron de sous caisse est relié respectivement à l'avant du longeron de soubassement et à l'avant du longeron de tunnel par deux éléments transversaux en tôle emboutie.

Les longerons et éléments transversaux ci-dessus sont constitués par de nombreuses pièces en tôle assemblées les unes aux autres, ce qui augmente à la fois la masse et les coûts de fabrication.

Par ailleurs, la structure de la caisse doit être conçue et dimensionnée de façon à protéger les occupants, en particulier en cas de choc frontal à grande vitesse et pour résister à un choc avant sans dommage important pour limiter les coûts de réparation.

Ainsi, la structure de la liaison au reste de la caisse doit pouvoir répartir et transmettre les efforts à l'ensemble du véhicule pour préserver les occupants.

Tel est le but de la présente invention.

Ce but est atteint, selon l'invention, grâce à une structure de liaison entre la structure avant de la caisse d'un véhicule automobile et le soubassement de ce véhicule, comprenant un longeron de tunnel s'étendant sous la caisse du véhicule et de part et d'autre de ce longeron, un longeron de soubassement et un longeron de sous caisse s'étendant entre le longeron de tunnel et le longeron de soubassement, l'avant du longeron de sous caisse étant relié respectivement à l'avant du longeron de soubassement et à l'avant du longeron de tunnel par deux éléments transversaux, caractérisée en ce que chacun des deux éléments transversaux est constitué par une plaque emboutie en tôle d'acier ou d'aluminium dont l'une des deux extrémités opposées comprend une partie pliée qui s'appuie contre une face latérale du longeron de sous caisse et dont le bord est replié vers la face inférieure de ce longeron pour recouvrir partiellement cette face.

Les deux plaques qui relient les deux faces latérales et la face inférieure du longeron sous caisse au longeron de tunnel et au longeron de soubassement limitent les risques d'affaissement du longeron de soubassement en cas de choc frontal.

Les liaisons entre ces deux plaques limitent également les risques de glissement de ces plaques dans le sens longitudinal du véhicule en cas de choc frontal ainsi que les risques de rupture des points de liaison entre les plaques et le longeron.

Selon une version préférée de l'invention, lesdits longerons sont constitués par des profilés extrudés en acier ou en aluminium.

Ces profilés permettent à la fois d'alléger la structure, de réduire les coûts et d'augmenter la tenue de la structure à l'égard des chocs, notamment lorsque les profilés sont creux et présentent une section transversale polygonale.

Dans un mode de réalisation particulièrement avantageux de l'invention, le bord replié vers la face inférieure du longeron de sous caisse présente des dents séparées par des creux, ces dents étant situées en regard des creux réalisés entre les dents du bord replié correspondant de l'autre plaque emboutie.

De préférence également, les dents de l'une des deux plaques sont partiellement engagées dans les creux de l'autre plaque.

Ces dents séparées par des creux permettent d'augmenter la surface de contact entre chacun des bords repliés respectifs des deux plaques sur la face inférieure du longeron, ce qui permet d'optimiser la fixation de ces deux plaques au longeron.

Selon d'autres particularités avantageuses de l'invention :
- au moins le longeron de sous caisse présente une partie sensiblement horizontale et une partie avant oblique et montante et la partie pliée de chacune des deux plaques qui s'appuie contre une face latérale du longeron de sous caisse s'étend partiellement sur la partie horizontale de ce longeron et partiellement sur la partie avant oblique de ce longeron ;
- la partie pliée de chacune des deux plaques qui s'appuie contre une face latérale du longeron de sous caisse est reliée au reste de la plaque par au moins deux plis, un premier pli reliant ladite partie de la plaque à une face inférieure de la plaque perpendiculaire à ladite partie de la plaque et un deuxième pli reliant cette partie à une face latérale avant de la plaque également perpendiculaire à ladite partie ;
- un troisième pli relie ladite partie de la plaque à une face perpendiculaire à la face latérale avant de cette plaque.

Selon un autre aspect, l'invention concerne également un véhicule automobile dont la caisse comprend une structure de liaison selon l'invention.

D'autres particularités et avantages de l'invention apparaîtront encore tout au long de la description ci-après.

Aux dessins annexés, donnés à titre d'exemples, non limitatifs :
- la figure 1 est une vue en perspective d'une structure de liaison entre la structure avant et le soubassement de la caisse d'un véhicule automobile,
- la figure 2 est une vue latérale de la structure représentée sur la figure 1,
- la figure 3 est une vue agrandie d'un détail de la structure représentée sur la figure 1.

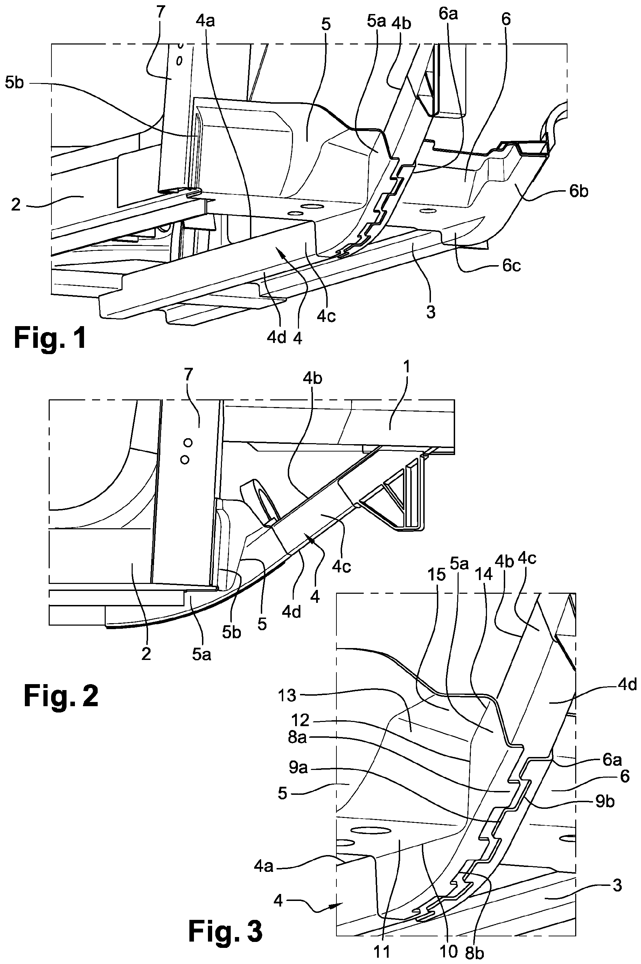

Les figures 1 à 3 représentent la structure de liaison entre la structure avant de la caisse d'un véhicule automobile et le soubassement de ce véhicule.

La structure avant (également appelée bloc avant) comprend essentiellement les deux brancards avant dont l'un désigné par la référence 1 est visible partiellement sur la figure 2.

Le soubassement comprend essentiellement le plancher qui s'étend entre les deux longerons de soubassement dont l'un désigné par la référence 2 est visible sur les figures 1 et 2.

La structure de liaison comprend un longeron de tunnel 3 s'étendant sous la caisse du véhicule et de part et d'autre de ce longeron 3, le longeron de soubassement 2 et un longeron de sous caisse 4 s'étendant entre le longeron de tunnel 3 et le longeron de soubassement 2.

L'avant du longeron de sous caisse 4 est relié respectivement à l'avant du longeron de soubassement 2 et à l'avant du longeron de tunnel 3 par deux éléments transversaux 5, 6.

L'élément transversal 5 est également relié à l'extrémité inférieure de l'un des deux pieds avant 7, comme montré sur les figures 1 et 2.

Conformément à l'invention, chacun des deux éléments transversaux 5, 6 est constitué par une plaque emboutie en tôle d'acier ou d'aluminium dont l'une des deux extrémités opposées comprend une partie pliée 5a, 6a qui s'appuie contre une face latérale 4c du longeron de sous caisse 4.

Comme montré sur les figures 1 et 3, le bord de chacune des parties pliées 5a, 6a est replié sur la face inférieure 4d de ce longeron 4 pour recouvrir partiellement cette face 4d.

Chacune des parties pliées 5a, 6a et le bord replié de celles-ci sont en outre respectivement soudés sur les faces 4c et 4d du longeron de sous caisse 4.

Par ailleurs, les bords 5b, 6b situés à l'opposé des parties pliées 5a, 6a sont respectivement soudés au pied avant 7.

Les trois longerons 2, 3, 4 sont constitués par des profilés extrudés en acier ou en aluminium.

En outre, ces profilés 2, 3, 4 sont de préférence creux et leur section transversale polygonale.

De plus, la figure 3 montre que le bord de chaque partie 5a, 6a qui est replié vers la face inférieure 4d du longeron de sous caisse 4 présente des dents 8a, 9a séparées par des creux 8b, 9b, ces dents 8a, 9a étant situées en regard des creux 8b, 9b réalisés entre les dents du bord replié 5a, 6a correspondant de l'autre plaque emboutie 5, 6.

En outre, les dents 8a, 9a de l'une des deux plaques 5, 6 sont partiellement engagées dans les creux 8b, 9b de l'autre plaque.

Les figures 1 à 3 montrent également que le longeron de sous caisse 4 présente une partie sensiblement horizontale 4a et une partie avant oblique et montante 4b.

La partie pliée 5a, 6a de chacune des deux plaques 5, 6 qui s'appuie contre une face latérale 4c du longeron de sous caisse 4 s'étend sur une zone relativement étendue de ce longeron 4 qui commence sur la partie horizontale 4a et s'arrête au-delà de la courbure du longeron 4 sur la partie oblique de celui-ci.

De plus, la partie pliée 5a, 6a de chacune des deux plaques 5, 6 qui s'appuie contre une face latérale 4c du longeron de sous caisse 4 est reliée au reste de la plaque 5, 6 par plusieurs plis.

Un premier pli 10 relie la partie pliée 5a, 6a de la plaque 5, 6 à une face inférieure 11 de la plaque perpendiculaire à la partie 5a, 6a de la plaque.

Un deuxième pli 12 relie la partie pliée 5a, 6a à une face latérale avant 13 de la plaque 5, 6 qui est également perpendiculaire à la partie pliée 5a, 6a.

En outre, un troisième pli 14 relie la partie 5a, 6a de la plaque 5, 6 à une face 15 perpendiculaire à la face latérale avant 13 de cette plaque 5, 6.

Le longeron de tunnel 3 présente (voir figure 1), comme le longeron de sous caisse 4, une partie rectiligne et une partie oblique montante.

L'extrémité 6b de la plaque 6 opposée au longeron de sous caisse 4 présente une partie pliée 6c qui s'appuie sur la face latérale du longeron de tunnel 3.

Le bord de cette partie pliée 6c est replié sur la face inférieure du longeron 3.

Comme dans le cas du longeron de sous caisse 4, la plaque 6 est fixée au longeron 3 sur deux faces perpendiculaires de ce longeron.

Cette fixation limite l'affaissement des longerons 3 et 4 et le glissement de chaque plaque 5, 6 parallèlement au sens longitudinal du véhicule, en cas de choc frontal.

En outre, le risque de cisaillement des points de fixation est réduit.

Dans le cas du longeron de sous caisse 4, la présence des dents 8a, 9a sur les plaques 5, 6 permet d'augmenter la surface de contact entre ces plaques et le longeron 4, ce qui contribue à réduire les risques ci-dessus.

Globalement, l'invention permet de limiter le nombre de renforts additionnels nécessaires dans une conception traditionnelle pour obtenir une tenue suffisante de la structure lors d'un choc à grande vitesse.

En outre, du fait de la limitation du nombre de renforts nécessaires, l'invention permet de réduire la masse des véhicules et donc leur consommation de carburant.

## Revendications

1. Structure de liaison entre la structure avant de la caisse d'un véhicule automobile et le soubassement de ce véhicule, comprenant un longeron de tunnel (3) s'étendant sous la caisse du véhicule et de part et d'autre de ce longeron (3), un longeron de soubassement (2) et un longeron de sous caisse (4) s'étendant entre le longeron de tunnel (3) et le longeron de soubassement (2), l'avant du longeron de sous caisse (4) étant relié respectivement à l'avant du longeron de soubassement (2) et à l'avant du longeron de tunnel (3) par deux éléments transversaux (5, 6), **caractérisée en ce que** chacun des deux éléments transversaux (5, 6) est constitué par une plaque emboutie en tôle d'acier ou d'aluminium dont l'une des deux extrémités opposées comprend une partie pliée (5a, 6a) qui s'appuie contre une face latérale (4c) du longeron de sous caisse (4) et dont le bord est replié vers la face inférieure (4d) de ce longeron (4) pour recouvrir partiellement cette face (4d).

2. Structure de liaison selon la revendication 1, **caractérisée en ce que** lesdits longerons (2, 3, 4) sont constitués par des profilés extrudés en acier ou en aluminium.

3. Structure de liaison selon la revendication 2, **caractérisée en ce que** lesdits profilés sont creux.

4. Structure de liaison selon la revendication 3, **caractérisée en ce que** la section transversale des profilés est polygonale.

5. Structure de liaison selon l'une des revendications 1 à 4, **caractérisée en ce que** le bord replié vers la face inférieure (4d) du longeron de sous caisse (4) présente des dents (8a, 9a) séparées par des creux (8b, 9b), ces dents étant situées en regard des creux réalisés entre les dents du bord replié correspondant de l'autre plaque emboutie (5, 6).

6. Structure de liaison selon la revendication 5, **caractérisée en ce que** les dents (8a, 9a) de l'une des deux plaques (5, 6) sont partiellement engagées dans les creux (8b, 9b) de l'autre plaque.

7. Structure de liaison selon l'une des revendications 1 à 6, **caractérisée en ce qu'**au moins le longeron de sous caisse (4) présente une partie sensiblement horizontale (4a) et une partie avant (4b) oblique et montante et la partie pliée (5a, 6a) de chacune des deux plaques (5, 6) qui s'appuie contre une face latérale du longeron de sous caisse s'étend partiellement sur la partie horizontale (4a) de ce longeron (4) et partiellement sur la partie avant (4b) oblique de ce longeron (4).

8. Structure de liaison selon l'une des revendications 1 à 7, **caractérisée en ce que** la partie pliée (5a, 6a) de chacune des deux plaques (5, 6) qui s'appuie contre une face latérale du longeron de sous caisse (4) est reliée au reste de la plaque par au moins deux plis (10, 12), un premier pli (10) reliant ladite partie (5a, 6a) de la plaque (5, 6) à une face inférieure (11) de la plaque perpendiculaire à ladite partie de la plaque et un deuxième pli (12) reliant cette partie à une face latérale avant (13) de la plaque également perpendiculaire à ladite partie (5, 6).

9. Structure de liaison selon la revendication 8, **caractérisée en ce qu'**un troisième pli (14) relie ladite partie (5a, 6a) de la plaque (5, 6) à une face (15) perpendiculaire à la face latérale avant (13) de cette plaque.

10. Véhicule automobile dont la caisse comprend une structure de liaison selon l'une des revendications 1 à 9.

## Patentansprüche

1. Verbindungsstruktur zur Verbindung zwischen der vorderen Struktur der Karosserie eines Kraftfahrzeugs und der Unterkonstruktion dieses Kraftfahrzeugs, umfassend einen tunnelartigen Längsträger (3), der sich unter der Karosserie des Fahrzeugs erstreckt, und beiderseits dieses Längsträgers (3) einen Längsträger einer Unterkonstruktion (2) und einen Längsträger einer Unterkarosserie (4), der sich zwischen dem tunnelartigen Längsträger (3) und dem Längsträger einer Unterkonstruktion (2) erstreckt, wobei der vordere Bereich des Längsträgers einer Unterkarosserie (4) mit dem vorderen Bereich des Längsträgers einer Unterkonstruktion (2) bzw. mit dem vorderen Bereich des tunnelartigen Längsträgers (3) durch zwei Querelemente (5, 6) verbunden ist, **dadurch gekennzeichnet, dass** jedes der zwei Querelemente (5, 6) von einer tiefgezogenen Platte aus Stahlblech oder Aluminium gebildet ist, wobei eines der zwei gegenüberliegenden Enden einen gefalzten Teil (5a, 6a) umfasst, der sich an eine Seitenfläche (4c) des Längsträgers einer Unterkarosserie (4) anlegt, und dessen Rand zu der Innenfläche (4d) dieses Längsträgers (4) gefalzt ist, um diese Fläche (4d) teilweise abzudecken.

2. Verbindungsstruktur nach Anspruch 1, **dadurch gekennzeichnet, dass** die Längsträger (2, 3, 4) von extrudierten Profilen aus Stahl oder Aluminium gebildet sind.

3. Verbindungsstruktur nach Anspruch 2, **dadurch gekennzeichnet, dass** die Profile hohl sind.

4. Verbindungsstruktur nach Anspruch 3, **dadurch gekennzeichnet, dass** der Querschnitt der Profile polygonal ist.

5. Verbindungsstruktur nach einem der Ansprüche 1 bis 4, **dadurch gekennzeichnet, dass** der zu der Innenfläche (4d) gefalzte Rand des Längsträgers einer Unterkarosserie (4) Zähne (8a, 9a) aufweist, die durch Hohlräume (8b, 9b) getrennt sind, wobei diese Zähne gegenüber Hohlräumen angeordnet sind, die zwischen den Zähnen des gefalzten Randes entsprechend der anderen tiefgezogenen Platte (5, 6) hergestellt sind.

6. Verbindungsstruktur nach Anspruch 5, **dadurch gekennzeichnet, dass** die Zähne (8a, 9a) einer der zweite Platten (5, 6) teilweise in den Hohlräumen (8b, 9b) der anderen Platte in Eingriff sind.

7. Verbindungsstruktur nach einem der Ansprüche 1 bis 6, **dadurch gekennzeichnet, dass** mindestens der Längsträger einer Unterkarosserie (4) einen im Wesentlichen horizontalen Teil (4a) und einen schrägen und aufsteigenden vorderen Teil (4b) aufweist, und sich der gefalzte Teil (5a, 6a) jeder der zwei Platten (5, 6), der sich an eine Seitenfläche des Längsträgers anlegt, teilweise auf dem horizontalen Teil (4a) dieses Längsträgers (4) und teilweise auf dem schrägen vorderen Teil (4b) dieses Längsträgers (4) erstreckt.

8. Verbindungsstruktur nach einem der Ansprüche 1 bis 7, **dadurch gekennzeichnet, dass** der gefalzte Teil (5a, 6a) jeder der zwei Platten (5, 6), der an einer Seitenfläche des Längsträgers einer Unterkarosserie (4) anliegt, mit dem Rest der Platte durch mindestens zwei Falze (10, 12) verbunden ist, wobei ein erster Falz (10) den Teil (5a, 6a) der platte (5, 6) mit einer Unterseite (11) der Platte senkrecht auf den Teil der Platte verbindet, und ein zweiter Falz (12) diesen Teil mit einer vorderen Seitenfläche (13) der Platte ebenfalls senkrecht auf den Teil (5, 6) verbindet.

9. Verbindungsstruktur nach Anspruch 8, **dadurch gekennzeichnet, dass** ein dritter Falz (14) den Teil (5a, 6a) der Platte (5, 6) mit einer Fläche (15) senkrecht auf die vordere Seitenfläche (13) dieser Platte verbindet.

10. Kraftfahrzeug, dessen Karosserie eine Verbindungsstruktur nach einem der Ansprüche 1 bis 9 umfasst.

## Claims

1. A connecting structure between the forward structure of the body shell of a motor vehicle and the understructure of this vehicle, including a tunnel longitudinal member (3) extending under the body shell of the vehicle and, on each side of this longitudinal member (3), an understructure longitudinal member (2) and an underbody longitudinal member (4) extending between the tunnel longitudinal member (3) and the understructure longitudinal member (2), the front of the underbody longitudinal member (4) being connected respectively to the front of the understructure longitudinal member (2) and to the front of the tunnel longitudinal member (3) by two transverse elements (5, 6), **characterized in that** each of the two transverse elements (5, 6) is made up of a pressed steel or aluminium sheet metal plate, one of the two opposite ends of which includes a bent part (5a, 6a) which rests against a lateral face (4c) of the underbody longitudinal member (4) and the edge of which is folded over toward the lower face (4d) of this longitudinal member (4) in order to partially cover this face (4d).

2. The connecting structure according to Claim 1, **characterized in that** said longitudinal members (2, 3, 4) are constituted by extruded steel or aluminium profiles.

3. The connecting structure according to Claim 2, **characterized in that** said profiles are hollow.

4. The connecting structure according to Claim 3, **characterized in that** the cross-section of the profiles is polygonal.

5. The connecting structure according to one of Claims 1 to 4, **characterized in that** the edge which is folded over toward the lower face (4d) of the underbody longitudinal member (4) has teeth (8a, 9a) separated by hollows (8b, 9b), these teeth being situated opposite hollows formed between the teeth of the corresponding folded-over edge of the other pressed plate (5, 6).

6. The connecting structure according to Claim 5, **characterized in that** the teeth (8a, 9a) of one of the two plates (5, 6) are partly engaged in the hollows (8b, 9b) of the other plate.

7. The connecting structure according to one of Claims 1 to 6, **characterized in that** at least the underbody longitudinal member (4) has a substantially horizontal part (4a) and an oblique and rising front part (4b), and the bent part (5a, 6a) of each of the two plates (5, 6) which rests against a lateral face of the underbody longitudinal member extends partly over the horizontal part (4a) of this longitudinal member (4) and partly over the front oblique part (4b) of this longitudinal member (4).

8. The connecting structure according to one of Claims 1 to 7, **characterized in that** the bent part (5a, 6a) of each of the two plates (5, 6) which rests against a lateral face of the underbody longitudinal member (4) is connected to the remainder of the plate by at least two folds (10, 12), a first fold (10) connecting said part (5a, 6a) of the plate (5, 6) to a lower face (11) of the plate perpendicular to said part of the plate, and a second fold (12) connecting this part to a lateral front face (13) of the plate also perpendicular to said part (5, 6).

9. The connecting structure according to Claim 8, **characterized in that** a third fold (14) connects said part (5a, 6a) of the plate (5, 6) to a face (15) perpendicular to the lateral front face (13) of this plate.

10. A motor vehicle, the body shell of which includes a connecting structure according to one of Claims 1 to 9.
